# EUROPÄISCHE PATENTSCHRIFT

(11) **EP 0 820 654 B1**
(45) Veröffentlichungstag und Bekanntmachung des Hinweises auf die Patenterteilung: **25.04.2001**
(21) Anmeldenummer: 97902163.1
(22) Anmeldetag: 08.01.1997
(51) Int. Cl.: H02K 41/02, H02K 9/197

(54) **LINEARMOTOR**
LINEAR MOTOR
MOTEUR LINEAIRE

(30) Priorität: 08.02.1996 DE 19604642
(43) Veröffentlichungstag der Anmeldung: 28.01.1998
(73) Patentinhaber: Siemens Linear Motor Systems GmbH & Co. KG, 80997 München (DE)
(72) Erfinder: SIENZ, Michael, D-51491 Overath (DE); STOIBER, Dietmar, D-82031 Grünwald (DE); SCHWARZ, Gerd, D-80809 München (DE)
(74) Vertreter: Zedlitz, Peter, Dipl.-Inf.
(86) Internationale Anmeldenummer: EP9700039
(87) Internationale Veröffentlichungsnummer: WO9729535

(56) Entgegenhaltungen:
- WO-A-91/05398
- DE-A- 2 111 881
- US-A- 2 606 946
- US-A- 4 839 545
- PATENT ABSTRACTS OF JAPAN vol. 014, no. 062 (E-0883), 5.Februar 1990 & JP 01 283042 A (DAIFUKU CO LTD), 14.November 1989,
- PATENT ABSTRACTS OF JAPAN vol. 012, no. 400 (M-756), 24.Oktober 1988 & JP 63 144702 A (TOSHIBA CORP), 16.Juni 1988,
- PATENT ABSTRACTS OF JAPAN vol. 016, no. 497 (E-1279), 14.Oktober 1992 & JP 04 183258 A (DAIFUKU CO LTD), 30.Juni 1992,

## Beschreibung

Die Erfindung bezieht sich auf einen Linearmotor gemäß Oberbegriff des Patentanspruchs 1.

Linearmotoren werden bei modernen Produktionsmaschinen aufgrund ihrer besonderen Schnelligkeit und Präzision immer häufiger anstelle von konventionellen Rotationsmotoren und deren mechanischen Transmissionsgliedern verwendet, wobei in der Regel das Primärteil des Linearmotors direkt an das zu bewegende Maschinenteil der Produktionsmaschine angekoppelt ist. Im Gegensatz zum Rotationsmotor, der mittels seiner mechanischen Transmissionsglieder aus dem unmittelbaren Arbeitsbereich der Produktionsmaschine verlegt werden kann, ist der Linearmotor den im Arbeitsbereich der Produktionsmaschine gegebenen Einwirkungen, beispielsweise einer intensiven Kühlschmiermittelbeaufschlagung, unmittelbar ausgesetzt. Zum anderen ist der Arbeitsbereich der Produktionsmaschine durch die Abwärme beeinträchtigt, die in den Läuferwicklungen des Primärteils aufgrund des ohmschen Widerstandes in erheblichem Umfang entsteht. Insbesondere bei Produktionsmaschinen, bei denen erhöhte Anforderungen an die Produktionsgenauigkeit gestellt werden, sind zusätzlich eingebrachte Wärmemengen nicht akzeptabel. Es ist zwar grundsätzlich bekannt, die in Primärteilen entstehende Abwärme durch Kühlmittelkreisläufe abzuführen, dergleichen ist es aus der Verkehrstechnik grundsätzlich bekannt, Primärteile von Linearmotoren durch Umhüllungen aus Edelstahlblech vor Umwelteinwirkungen zu schützen. Die vorbeschriebenen bekannten Maßnahmen stellen jedoch nur an den jeweiligen Einsatzzweck angepaßte technische Lösungen dar.

Es ist aus der US 4.839.545 bekannt, daß der Eisenkern des Primärteils eines Linearmotors in seinem Rückenteil von einem Kühlkreislaufsystem durchsetzt ist. Diese Kühleinrichtung ist vorrangig auf die Kühlerfordernisse des Eisenkerns ausgelegt und kann an der Anschlußstelle an das zu bewegende Maschinenteil einer Produktionsmaschine nicht die thermisch neutralen Temperaturzustände schaffen, wie sie im Arbeitsbereich der Produktionsmaschine erforderlich sind. Das Primärteil weist im übrigen keinen Schutz für dessen Funktionselemente, wie die in den Eisenkernnuten angeordneten stromdurchflossenen Leiter auf, so daß Störungen infolge der im Arbeitsbereich einer Produktionsmaschine auftretenden Einwirkungen durch Staub, Zerspanungsabfall sowie Kühl- und Schmiermittel nicht ausgeschlossen werden können.

Aus der WO-A-91 05 398 ist ferner ein Linearmotor bekannt, bei dem der Eisenkern und dessen mit Leiter-Wicklungen durchsetzte T-Nuten allseitig gegen Störeinwirkungen, wie sie im Arbeitsbereich einer Produktionsmaschine auftreten können, geschützt sind. Eine Kühlung ist jedoch nur für den Eisenkern des Primärteils gegeben. Die Schaffung thermisch neutraler Temperaturzustände an der Anschlußstelle zu einem zu bewegenden Maschinenteil einer Produktionsmaschine ist damit nicht möglich.

Der vorliegenden Erfindung hingegen liegt die Aufgabe zugrunde, das Primärteil eines Linearmotors als universell einsetzbares Standardfunktionsteil auszubilden, das von im Arbeitsbereich von Produktionsmaschinen gegebenen Störeinwirkungen unbeeinflußbar ist und selbst aufgrund thermischer Neutralität ein Motorteil darstellt, das die Temperaturgegebenheiten im Arbeitsbereich der Produktionsmaschine nicht beeinträchtigt.

Diese Aufgabe wird erfindungsgemäß durch die kennzeichnenden Merkmale des Patentanspruchs 1 gelöst.

Vorteilhafte Ausgestaltungen und Weiterbildungen des erfindungsgemäßen Linearmotors ergeben sich aus den Unteransprüchen.

Bei dem erfindungsgemäßen Linearmotor ist das Primärteil von der Kühlplatte und dem wannenförmigen Kapselungsgehäuse allseitig umschlossen, so daß dieses Motorteil in seiner Funktion nicht durch die im Arbeitsbereich einer Produktionsmaschine gegebenen Störeinflüsse beeinträchtigt werden kann, wobei jedoch auch sichergestellt ist, daß das Motorteil selbst keine Abwärme in den Arbeitsbereich abgibt. Der Eisenkern des Primärteils ist dabei mit einem eigenen integrierten Kühlkreislauf versehen, wodurch sichergestellt ist, daß der Linearmotor nicht überhitzt und stets auf der richtigen Betriebstemperatur gehalten werden kann. Der in der Kühlplatte vorgesehene zweite, nutzlastseitige Kühlkreislauf hält von der Maschine schädliche Temperaturen fern.

Vorzugsweise sind zu diesem Zweck der Eisenkern des Primärteils und die Kühlplatte durch eine thermische Isolierschicht voneinander getrennt, so daß eine effizientere und genauere Regelung der Temperaturen der beiden Kühlkreisläufe bewerkstelligt werden kann. Insbesondere läßt sich dadurch die Temperatur der Kühlplatten in engen Grenzen auf dem geforderten neutralen Temperaturniveau halten.

Zur Erhöhung der elektrischen Durchschlagsfestigkeit und zur Ableitung der Verlustwärme aus den Läuferwicklungen können die Hohlräume innerhalb des von der Kühlplatte und dem Kapselungsgehäuse umschlossenen Raumes mit einer festen Vergußmasse oder mit einem Wärmeträgeröl, z.B. Tranformatorenöl, ausgefüllt sein. Die Belastbarkeit der Läuferwicklungen läßt sich damit steigern.

Vorteilhafterweise ist die Kühlplatte separat mit dem Eisenkern des Primärteils verschraubt, wobei zur Befestigung des gekapselten Primärteils an dem zu bewegenden Maschinenbauteil Schraubhülsen vorgesehen sein können, mit denen einerseits die Kühlplatte und der Eisenkern, gegebenenfalls unter Zwischenlage der Isolierschicht, miteinander verschraubt werden können und die ein Innengewinde aufweisen, das zu im Maschinenbauteil angeordneten Bohrungen fluchtet.

Durch diese Bohrungen sind die Befestigungsschrauben geführt, mit denen andererseits das gekapselte Linearmotorteil mit dem zu bewegenden Maschinenteil verschraubbar ist. Die Befestigungsart mit der Schraubhülse bietet den Vorteil, daß die Befestigungsschrauben nicht direkt mit dem in der Regel aus geschichteten Elektroblech bestehenden Eisenkörper verschraubt sind, sondern in dem festeren Innengewinde der Schraubhülse, so daß sich auch mehrmalige Demontagen des Linearmotorteils nicht nachteilig auf die Gewindefestigkeit auswirken können.

Zur Erhöhung der thermischen Neutralität des Linearmbtorteils kann es vorteilhaft sein, den in Form von Strahlungswärme anfallenden Anteil der Verlustwärme durch Strahlbleche abzuführen, die parallel zu den Seiten-und/oder Stirnflächen des Kapselungsgehäuses angeordnet sind. Durch eine thermisch leitende Verbindung der Strahlbleche mit der Kühlplatte, wird die von den Strahlblechen aufgenommene Strahlungswärme in die Kühlplatte eingeleitet und über den darin enthaltenen Kühlkreislauf abgeführt.

Die Erfindung wird nachfolgend in der Zeichnung anhand von Ausführungsbeispielen näher erläutert. Es zeigt:
- Fig. 1: den Querschnitt durch das Primärteil und das Sekundärteil eines an einem Maschinenteil befestigten Linearmotors und
- Fig. 2: eine Detailansicht nach Fig. 1 mit einer weiteren Befestigungsart des Primärteils am Maschinenteil.

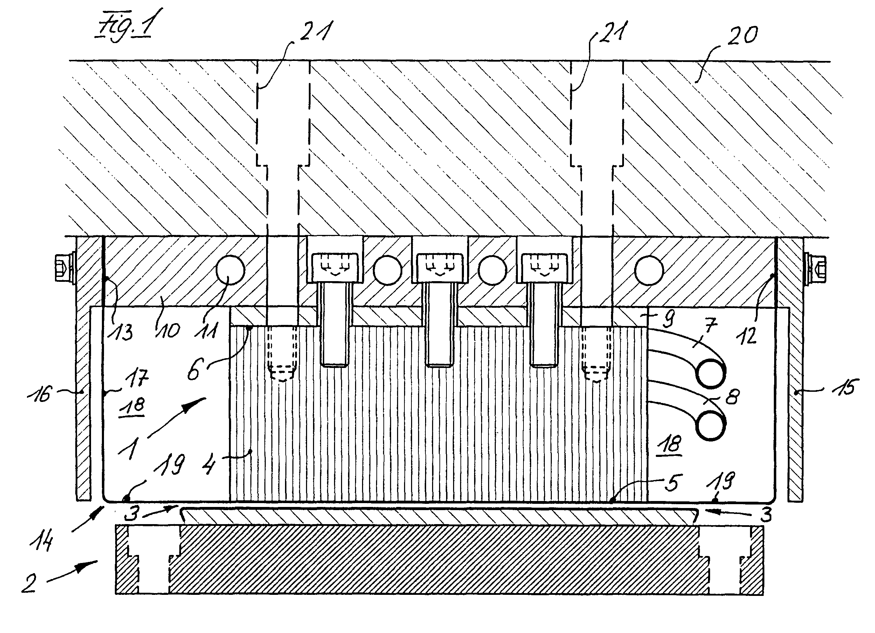

Die Fig. 1 zeigt den Querschnitt durch ein Primärteil 1 und ein Sekundärteil 2 eines Linearmotors, die beide einen langgestreckten Luftspalt 3 einschließen. Das Primärteil 1 besteht aus einem aus Elektroblechen geschichteten Eisenkörper 4 in dessen dem Sekundärteil 2 zugewandter Unterseite Nuten zur Aufnahme der stromduchflossenen Leiterwicklungen (nicht dargestellt) angeordnet sind. Die Unterseite des Primärteils 1 wird von der Nutenfläche 5 gebildet.

Durch den Eisenkörper 4 verläuft ein nicht näher dargestellter Kühlmitteldurchströmter Kühlkreislauf, von dem lediglich die Vorlaufleitung 7 und die Rücklaufleitung 8 gezeigt sind.

Der Eisnekörper 4 ist unter Zwischenlage einer thermischen Isolierschicht 9 mit einer Kühlplatte 10 verschraubt, die aus massivem Aluminium besteht und von den Kühlkanälen 11 eines zweiten Kühlkreislaufes durchsetzt ist. An den Seitenflächen 12 und 13 der Kühlplatte 10 sind unter Zwischenlage eines dünnwandigen Kapselungsgehäuses 14 Strahlbleche 15 und 16 befestigt. Das Kapselungsgehäuse 14 besteht aus Seitenwänden 17 und Stirnwänden 18, wobei von letzteren nur die hintere Stirnwand zu sehen ist. Auf der Unterseite besteht das Kapselungsgehäuse 14 aus einer die Nutenfläche 5 abdeckenden Bodenfläche 19. Das Primärteil 1 wird von der Kühlplatte 10 und dem Kapselungsgehäuse 14 vollständig und vollkommen abgedichtet umschlossen, wobei die Vor- und Rücklaufleitungen 7 und 8 abgedichtet durch das Kapselungsgehäuse 14 nach außen geführt sind.

Das mittels der Kühlplatte 10 und dem Kapselungsgehäuse 14 vollkommen gekapselte Primärteil 1 ist mit Schrauben (nicht dargestellt) mit dem zu bewegenden Maschinenteil 20 einer nicht näher dargestellten Produktions-maschine verbindbar. Die Schrauben durchsetzen die Bohrungen 21 im Maschinenteil 20 und in der Isolierschicht 9 und sind in im Eisenkörper 4 ausgebildeten Gewindebohrungen 22 einschraubbar.

Da der Eisenkörper 4 schichtweise aus Elektroblechen zusammengesetzt ist, sind die Gewindebohrungen 22 nur in begrenztem Umfang belastbar. Die vorbeschriebene Befestigungsart ist daher nur geeignet, wenn das Primärteil 1 dauerhaft mit dem Maschinenteil 20 verbunden bleiben kann.

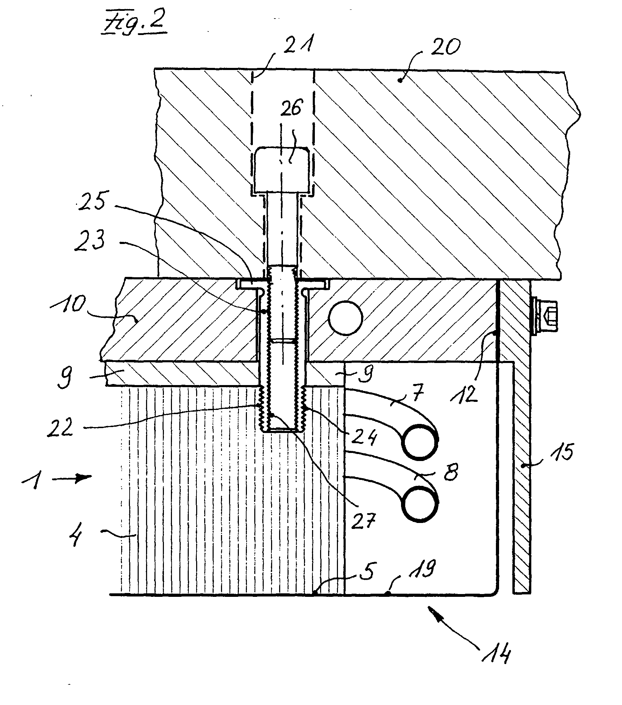

Soll die Verbindung jedoch höheren Belastungen standhalten können und mehrmals lösbar sein, beispielsweise zu Wartungszwecken, so ist die in Fig. 2 dargestellte Verbindungsmethode geeigneter. Danach erfolgt die Verbindung der Kühlplatte 10 und der Isolierplatte 9 mit dem Eisenkörper 4 des Primärteils 1 über eine Schraubhülse 23, die mit einem Außengewinde 24 in der Gewindebohrung 22 im Eisenkörper 4 verschraubt ist, wobei die Kühlplatte 10 und die Isolierplatte 9 über einen in der Kühlplatte 10 aufliegenden Halterungsrand 25 der Schraubhülse 23 auf die Rückenfläche 6 des Eisenkörpers 4 gepreßt werden.

Die Schraubhülse 23 bleibt ständig mit dem Primärteil 1 verscharubt, wobei die Befestigung mit dem Maschinenteil 20 über Schrauben 26 erfolgt, die in der Bohrung 21 des Maschinenteils 20 abgestützt sind und im Innengewinde 27 der Schraubhülse 23 verschraubt sind. Das aus dem massiven Material der Schraubhülse 23 bestehende Innengewinde 27 ist wesentlich stärker belastbar als ein im geschichteten Eisenkörper 4 ausgebildetes Gewinde.

## Patentansprüche

1. Linearmotor mit einem Primär- (1) und einem Sekundärteil (2), bei dem das Primärteil einen vorzugsweise aus Eisenblechen zusammengesetzten Eisenkern (4) aufweist, in dem in der dem Sekundärteil zugewandten Nutenfläche (5) Nuten zur Aufnahme der ein- oder mehrphasigen Läuferwicklungen angeordnet sind und der auf der der Nutenfläche (15) gegenüberliegenden Fläche eine ebene, von Kühlmittel durchströmte Rückenfläche aufweist, dadurch gekennzeichnet, daß die Rückenfläche aus einer Kühlplatte (10) mit einem nutzlastseitigen Kühlkreislauf besteht, mit der das Primärteil (1) an dem mittels des Linearmotors zu bewegenden Machinenteil befestigbar ist, daß der Eisenkern des Primärteils mit einem eigenen integrierten Kühlkreislauf (7,8) versehen ist und daß das Primärteil (1) von einem an der Kühlplatte (10) befestigten Kapselungsgehäuse (14) vollständig und abgedichtet umschlossen ist.

2. Linearmotor nach Anspruch 1, dadurch gekennzeichnet, daß das Kapselungsgehäuse (14) an der Kühlplatte (10) befestigt ist und aus jeweils zwei zur Kühlplatte (10) senkrechten Seiten- und Stirnwänden (17,18) und einer die Nutenfläche (5) abdeckenden Bodenfläche (19) besteht.

3. Linearmotor nach einem der Ansprüche 1 oder 2, dadurch gekennzeichnet, daß das Kapselungsgehäuse (14) aus einem dünnwandigen Blech aus unmagnetischem Metall, vorzugsweise aus Edelstahl, besteht.

4. Linearmotor nach einem der Ansprüche 1 bis 3, dadurch gekennzeichnet, daß die von der Kühlplatte (10) und dem Kapselungsgehäuse (14) eingeschlossenen Hohlräume mit einer festen Vergußmasse ausgefüllt sind.

5. Linearmotor nach einem der Ansprüche 1 bis 3 dadurch gekennzeichent, daß die von der Kühlplatte (10) und dem Kapselungsgehäuse (14) eingeschlossenen Hohlräume mit einem Wärmeträgeröl mit hoher elektrischer Durchschlagsfestigkeit, vorzugsweise mit Transformatorenöl, gefüllt sind.

6. Linearmotor nach einem der Ansprüche 1 bis 5, dadurch gekennzeichnet, daß die Kühlplatte(10) aus einer massiven Aluminiumplatte mit einer Stärke von 10 - 20 mm besteht.

7. Linearmotor nach einem der Ansprüche 1 bis 6, dadurch gekennzeichnet, daß zwischen dem Primärteil (1) und der Kühlplatte (10) eine thermische Isolierschicht (9) angeordnet ist.

8. Linearmotor nach einem der Ansprüche 1 bis 7, dadurch gekennzeichnet, daß im Parallelabstand zu den Seiten- und/oder Stirnflächen (17,18) des Kapselungsgehäuses (14) Strahlbleche (15) angeordnet sind, die mit der Kühlplatte (10) thermisch leitend verbunden sind.

9. Linearmotor nach einem der Ansprüche 1 bis 8, dadurch gekennzeichnet, daß die Befestigungselemente, mit denen die Kühlplatte (10) am Primärteil (1) befestigt ist, Gewindeansätze aufweisen, über die das Primärteil (1) mit dem Maschinenteil (20) verschraubbar ist.

10. Linearmotor nach Anspruch 9, dadurch gekennzeichnet, daß die Befestigungselemente jeweils aus einer Schraubhülse (23) mit Innen- und Außengewinde (27,24) bestehen, die mit einem Halterungsrand (25) in der Kühlplatte (10) abgestützt und mit dem Außengewinde (24) in der Rückenfläche (6) des Primärteils (1) verschraubt ist, wobei das Innengewinde (27) zu einer im Maschinenteil (20) befindlichen Bohrung (21) fluchtet, die von einer im Innengewinde (27) der Schraubhülse (23) verschraubten Befestigungsschraube (26) durchsetzt ist.

## Claims

1. Linear motor having a primary part (1) and a secondary part (2), in which the primary part has an iron core (4) preferably made up from iron sheets, in which arranged in the slot surface (5) which faces the secondary part are slots for receiving the single-phase or multi-phase rotor windings, and which, on the surface opposite the slot surface (15), has a planar rear surface through which coolant flows, characterised in that the rear surface comprises a cooling plate (10) having a useful-load-side cooling circuit, with which cooling plate the primary part (1) can be fastened to the machine part to be moved by means of the linear motor, in that the iron core of the primary part is provided with its own integrated cooling circuit (7, 8), and in that the primary part (1) is surrounded completely and in a sealed manner by an enclosure housing (14) fastened to the cooling plate (10).

2. Linear motor according to claim 1, characterised in that the enclosure housing (14) is fastened to the cooling plate (10) and comprises two side walls and two end walls (17, 18) at right angles to the cooling plate (10) and a base surface (19) which covers the slot surface (5).

3. Linear motor according to one of claims 1 or 2, characterised in that the enclosure housing (14) comprises a thin-walled sheet made of non-magnetic metal, preferably high-quality steel.

4. Linear motor according to one of claims 1 to 3, characterised in that the hollow spaces enclosed by the cooling plate (10) and the enclosure housing (14) are filled with a solid casting compound.

5. Linear motor according to one of claims 1 to 3, characterised in that the hollow spaces enclosed by the cooling plate (10) and the enclosure housing (14) are filled with a heat transfer oil with high electric breakdown strength, preferably with transformer oil.

6. Linear motor according to one of claims 1 to 5, characterised in that the cooling plate (10) comprises a solid aluminium plate with a thickness of 10 to 20 mm.

7. Linear motor according to one of claims 1 to 6, characterised in that arranged between the primary part (1) and the cooling plate (10) is a thermal insulating layer (9).

8. Linear motor according to one of claims 1 to 7, characterised in that arranged at a parallel distance from the side faces and/or end faces (17, 18) of the enclosure housing (14) are radiating sheets (15), which are connected to the cooling plate (10) in a thermally conductive manner.

9. Linear motor according to one of claims 1 to 8, characterised in that the fastening elements with which the cooling plate (10) is fastened to the primary part (1) have threaded extensions, by way of which the primary part (1) can be screwed to the machine part (20).

10. Linear motor according to claim 9, characterised in that the fastening elements each comprise a threaded bushing (23) having internal and external threads (27, 24) which is supported with a holding edge (25) in the cooling plate (10) and screwed with the external thread (24) into the rear surface (6) of the primary part (1), the internal thread (27) being in alignment with a bore (21) located in the machine part (20), which bore is penetrated by a fastening screw (26) screwed in the internal thread (27) of the threaded bushing (23).

## Revendications

1. Moteur linéaire comportant une partie (1) primaire et une partie (2) secondaire, dans lequel la partie primaire comporte un noyau (4) en fer qui est composé de préférence de tôles en fer, dans lequel des encoches sont ménagées dans la surface (5) d'encoches tournée vers la partie secondaire pour recevoir des enroulements rotoriques monophasés ou multiphasés et qui comportent sur la surface faisant face à la surface (15) d'encoches une surface arrière plane, dans laquelle s'écoule un agent réfrigérant, caractérisé en ce que la face arrière est constituée d'une plaque (10) de refroidissement à circuit de refroidissement situé du côté de la charge utile, par laquelle la partie (1) primaire peut être fixée à la partie de machine à mettre en mouvement au moyen du moteur linéaire, en ce que le noyau en fer de la partie primaire est muni d'un circuit (7, 8) de refroidissement intégré propre et en ce que la partie (1) primaire est entourée totalement et de manière étanche d'un boîtier (14) de blindage fixé à la plaque (10) de refroidissement.

2. Moteur linéaire suivant la revendication 1, caractérisé en ce que le boîtier (14) de blindage est fixé à la plaque (10) de refroidissement et est constitué chaque fois de deux parois (17, 18) latérales et frontales perpendiculaires à la plaque (10) de refroidissement et d'une face (19) de fond recouvrant la surface (5) d'encoches.

3. Moteur linéaire suivant l'une des revendications 1 ou 2, caractérisé en ce que le boîtier (14) de blindage est constitué d'une tôle à paroi mince en métal non magnétique, de préférence en acier fin.

4. Moteur linéaire suivant l'une des revendications 1 à 3, caractérisé en ce que les cavités entourées par la plaque (10) de refroidissement et le boîtier (14) de blindage sont remplies d'une masse de coulée solide.

5. Moteur linéaire suivant l'une des revendications 1 à 3, caractérisé en ce que les cavités entourées par la plaque (10) de refroidissement et le boîtier (14) de blindage sont remplies d'une huile caloporteuse à grande résistance au claquage électrique, de préférence d'une huile pour transformateurs.

6. Moteur linéaire suivant l'une des revendications 1 à 5, caractérisé en ce que la plaque (10) de refroidissement est constituée d'une plaque pleine en aluminium ayant une épaisseur de 10 à 20 mm.

7. Moteur linéaire suivant l'une des revendications 1 à 6, caractérisé en ce qu'une couche (9) d'isolation thermique est montée entre la partie (1) primaire et la plaque (10) de refroidissement

8. Moteur linéaire suivant l'une des revendications 1 à 7, caractérisé en ce qu'il est monté à distance, parallèlement aux faces (17, 18) latérales et/ou frontale du boîtier (14) de blindage des tôles (15) de rayonnement qui sont reliées à la plaque (10) de refroidissement d'une manière conductrice de la chaleur.

9. Moteur linéaire suivant l'une des revendications 1 à 8, caractérisé en ce que les éléments de fixation par lesquels la plaque (10) de refroidissement est fixée à la partie (1) primaire comportent des prolongements filetés par l'intermédiaire desquels la partie (1) primaire peut être vissée à la partie (20) de machine.

10. Moteur linéaire suivant la revendication 9, caractérisé en ce que les éléments de fixation sont constitués chaque fois d'une douille (23) à vis à taraudage (27) et filetage (24) qui est soutenue par un bord (25) de fixation dans la plaque (10) de refroidissement et qui est vissée au filetage (24) dans la face (6) arrière de la partie (1) primaire, le taraudage (27) étant en alignement avec un alésage (21) qui se trouve dans la partie (20) de la machine et dans lequel passe une vis (26) de fixation vissée dans le taraudage (27) de la douille (23) à vis.
